# EUROPÄISCHE PATENTSCHRIFT

(11) **EP 0 795 444 B1**
(45) Veröffentlichungstag und Bekanntmachung des Hinweises auf die Patenterteilung: **04.07.2001**
(21) Anmeldenummer: 97103908.6
(22) Anmeldetag: 08.03.1997
(51) Int. Cl.: B60R 21/20

(54) **Beifahrer-Airbag Einbau-Modul**
Passenger air bag attachment module
Module de fixation pour sac gonflable pour passager

(30) Priorität: 11.03.1996 DE 19609532
(43) Veröffentlichungstag der Anmeldung: 17.09.1997
(73) Patentinhaber: TRW Automotive Safety Systems GmbH & Co. KG, 63743 Aschaffenburg (DE)
(72) Erfinder: Bohn, Stefan, 63773 Goldbach (DE); Wissel, Willi, 63776 Mömbris (DE)
(74) Vertreter: Degwert, Hartmut, Dipl.-Phys.

(56) Entgegenhaltungen:
- FR-A- 2 118 301
- FR-A- 2 335 373
- US-A- 5 263 739

## Beschreibung

Die Erfindung betrifft ein Einbau-Modul für einen Beifahrer-Airbag mit einem trogartigen Gehäuse, einem Gassack und einem um das Gehäuse umlaufenden Spannband.

Derartige Module, wie sie z.B. aus der FR-A-2 118 301 bekannt sind, werden im Rahmen der zunehmenden Ausstattung von Kraftfahrzeugen mit Airbags auch für die Beifahrerseite in großer Stückzahl für die Erstausrüstung wie auch zum Nachrüsten hergestellt und eingebaut. Dabei kommt es - wie bei allen Zulieferteilen für die Automobilindustrieauf preisgünstige Fertigung, einfache Montage und möglichst platz- und gewichtsparende Ausführung an, wobei selbstverständlich bei der Funktions- und Betriebssicherheit keine Abstriche in Kauf genommen werden können.

Für Module der eingangs genannten Art sind schon verschiedene Ausführungsbeispiele bekannt geworden. Ein Aspekt ist dabei bisher noch nicht befriedigend gelöst, nämlich die Befestigung des Gassacks an den mit der Kraftfahrzeugkarosserie fest verbundenen Teilen unter Berücksichtigung der vorstehend genannten Gesichtspunkte. In den meisten Fällen wird eine Vielzahl von Schrauben, Nieten oder dgl. vorgesehen, um das Gassackgewebe rund um den Querschnitt für die Freigabe des Gassacks beim Aufblasen punktweise festzulegen. Abgesehen davon, daß dies sehr aufwendig ist, besteht auch die Gefahr, daß die Befestigung nicht gleichmäßig ausfällt, daß somit beim Aufblasen einzelne Befestigungspunkte weit über die auslegungsmäßig mittlere Belastung beansprucht werden und reißen. Infolgedessen kann der Gassack beschädigt werden und wegen Gasverlusten nicht sein volles Volumen erreichen. Im ungünstigsten Fall kann das Ausreißen an einem Befestigungspunkt auch zu einer Kettenreaktion führen, wobei die benachbarten Befestigungspunkte schlagartig einer zu hohen Belastung ausgesetzt werden und nacheinander ebenfalls ausreißen, wodurch der Airbag seine Funktion im wesentlichen ganz verliert.

Der Erfindung liegt die Aufgabe zugrunde, solche Nachteile zu vermeiden und ein Airbag-Modul der eingangs genannten Art so weiterzubilden, daß mit konstruktiv einfachen Mitteln in allen Fällen eine betriebssichere Befestigung des Gassacks am Gehäuse gewährleistet werden kann.

Diese Aufgabe wird erfindungsgemäß dadurch gelöst, daß das Gehäuse ein im wesentlichen U-förmiges Basisteil und zwei im wesentlichen flache Endteile umfaßt , daß der Gassack oberhalb des Gasgenerators in das Gehäuse eingefaltet ist, wobei ein Randbereich des Gassacks allseitig über den Rand des Gehäuses nach außen umgelegt ist und längs des Basisteils um Zugstangen geschlungen ist, die zur Befestigung der Endteile am Basisteil dienen und in einer nutartig nach innen weisenden Vertiefung des Basisteils geführt sind, und daß das Spannband den Randbereich des Gassacks zwischen dem Rand des Gehäuses und den Zugstangen kraftschlüssig an der Außenseite des Gehäuses hält.

Nach einer zweckmäßigen Weiterbildung des Erfindungsgedankens ist vorgesehen, daß das Gehäuse eine außen umlaufende, auf die Breite des Spannbandes abgestellte, flache Vertiefung aufweist, mittels derer eine formschlüssige Komponente zur Halterung des Randbereichs des Gassacks am Gehäuse realisierbar ist.

Ist für den Gassack ein Schutzüberzug vorgesehen, so kann dessen Randbereich mit dem Randbereich des Gassacks am Gehäuse befestigt werden.

Ferner kann zusammen mit dem Randbereich des Gassacks auch ein Randbereich einer Abdeckkappe für den Gassack mittels des Spannbandes am Gehäuse befestigt werden.

Dazu ist vorgesehen, daß im Randbereich der Abdeckkappe eine außen umlaufende, auf die Breite des Spannbandes abgestellte, flache Vertiefung vorgesehen ist, mittels derer eine formschlüssige Komponente zur Halterung des Spannbandes an der Abdeckkappe realisiert ist.

Gemäß einer vorteilhaften Weiterbildung kann man auch so vorgehen, daß der Randbereich der Abdeckhaube zusätzlich noch mittels über den Anordnungsbereich des Spannbandes nach unten verlängerte Bereiche und darin ausgebildete Ausnehmungen in am Basisteil des Gehäuses ausgebildete Laschen eingehakt ist, wodurch eine formschlüssige Befestigung der Abdeckhaube am Gehäuse erreicht wird.

Schließlich ist es möglich, mittels der verlängerten und in die Laschen eingehakten Bereiche der Abdeckhaube in Verbindung mit den in den nutartigen Vertiefungen des Basisteils geführter Zugstangen und dem Spannband eine kombinierte kraft- und formschlüssige Befestigung des Gassacks zu erreichen.

In allen Fällen wird die bisher übliche Vielzahl von Befestigungspunkten durch ein umlaufendes Spannband ersetzt, durch das der Gassack entweder rein kraftschlüssig oder aber kombiniert kraft- und formschlüssig am Gehäuse festgehalten wird. Auf diese Weise werden mit Sicherheit Belastungsspitzen an einzelnen Befestigungspunkten vermieden, wenn der Gassack schlagartig mit Druckgas gefüllt wird. Der Randbereich des Gassacks wird durchgängig gehalten, wodurch eine im wesentlichen über den gesamten Umfang gleichmäßige Belastung im Aufblasfall erreicht wird. Diese Art der Befestigung hat den weiteren Vorteil, daß sie wesentlich elastischer ist, als eine punktweise Befestigung mittels Nieten oder Schrauben und das selbst dann, wenn fertigungsbedingt oder durch ungleichmäßiges Füllen bzw. Entfalten des Gassacks örtlich überdurchschnittliche Belastungen auftreten, nicht gleich mit einem Aufreißen gerechnet werden muß, weil die kraft- bzw. kombiniert kraft- und formschlüssige Befestigung wesentlich "nachgiebiger" ist und die Belastungsspitzen durch geringfügiges Durchrutschen des eingeklemmten Gassackgewebes leichter kompensieren kann. Die vorgeschlagene Befestigungsart ist daher nicht nur konstruktions- und fertigungsmäßig wesentlich einfacher als die bekannten Befestigungsmethoden, sie ist auch erheblich funktions- und betriebssicherer.

Weitere Einzelheiten des Erfindungsgedankens werden anhand den in Figuren 1 bis 4 dargestellten Ausführungsbeispielen näher erläutert. Es zeigen:
- Fig. 1: einen Querschnitt durch eine erste Ausführungsform.
- Fig.2: einen Längsschnitt und eine Seitenansicht der Ausführungsform gemäß Fig. 1.
- Fig.3: einen Querschnitt durch eine zweite Ausführungsform.
- Fig.4: einen Längsschnitt und eine Seitenansicht der Ausführungsform gemäß Fig. 3.

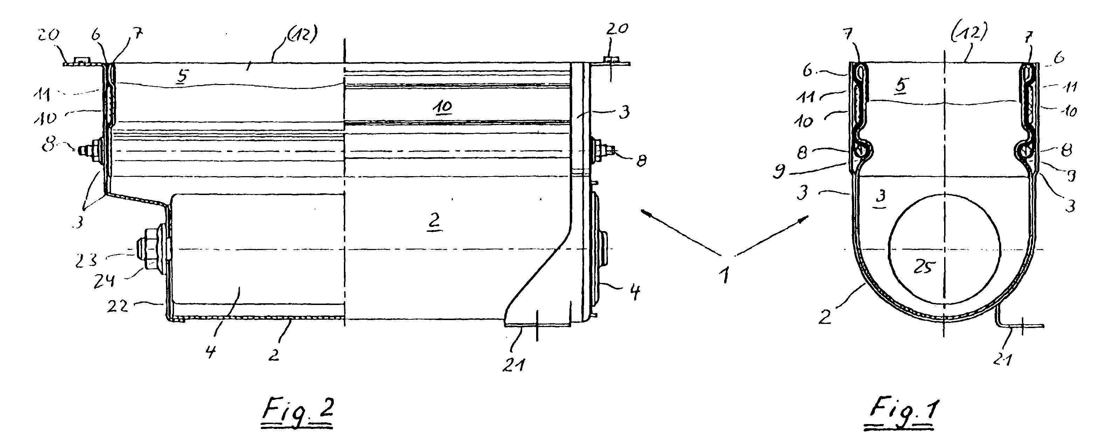

Das Gehäuse 1 gemäß Fig. 1 besteht im wesentlichen aus einem U-förmigen Basisteil 2 und zwei flachen Endteilen 3, die mit ihren abgekanteten Rändern das U-förmige Basisteil 2 endseitig übergreifen und mittels Zugstangen 8 gegeneinander verspannt sind. Das U-förmige Basisteil 2 und die Endteile 3 sind üblicherweise aus Blechabschnitten hergestellt und besitzen einen oberen Rand 7, der umgebörtelt ist oder einen um 180° umgeklappten Bereich aufweist. Auf diese Weise wird vermieden, daß der über den Rand 7 nach außen umgelegte Randbereich 6 des Gassacks 5 mit einer scharfen Schnittkante des Basisteils 2 oder der Endteile 3 in Berührung kommt. Der Randbereich 6 des Gassacks 5 ist um die Zugstangen 8 herumgeschlungen, die in einer nutartig nach innen weisenden Vertiefung 9 des Basisteils 2 geführt werden. Die eigentliche Festlegung des Randbereiches 6 am Gehäuse 1 erfolgt durch ein umlaufendes Spannband 10, das entweder eine im wesentlichen rein kraftschlüssige Verbindung ergibt oder aber - indem zusätzlich eine umlaufende, flache Vertiefung 11 vorgesehen wird - eine kombiniert kraft- und formschlüssige Befestigung ergibt. Die Endteile 3 können Durchbrüche 24, 25 für die Positionierung und Befestigung eines Gasgenerators 4 aufweisen. Sie können außerdem mit Laschen 20 und/oder Abkantungen 21 zur Befestigung des Einbau-Moduls in der Kraftfahrzeugkarosserie ausgestattet sein.

Mit dem Randbereich 6 des Gassacks 5 kann auch der Randbereich eines Schutzüberzuges 12 mittels des Spannbandes 10 am Gehäuse befestigt werden, wenn ein solcher Schutzüberzug vom Kunden gefordert wird.

Fig. 2 zeigt die bisher beschriebenen Bauteile, teils im Schnitt, teils in der Ansicht. Bei den Endteilen 3 können Doppelungsbereiche (linke Seite Fig. 2) vorgesehen werden, wenn dies für die Festlegung des Spannbandes 10 einerseits und die Ausbildung von Befestigungspunkten andererseits zweckmäßig erscheint. In Abwandlung von der im wesentlichen flachen Form können die Endteile 3 auch einen nach innen springenden und damit verkürzten Bereich 22 aufweisen, wenn die axiale Erstreckung des Gasgenerators 4 kürzer ist als die des eingefalteten Gassacks 5. Wie aus Fig. 2 ersichtlich, ist ein Gasgenerator 4 vorgesehen, der im rechten Endteil 3 geführt und im linken Endteil 3 mittels einer Schraube 23 festgelegt ist. Im übrigen kann auf die Erläuterungen zu Fig. 1 verwiesen werden.

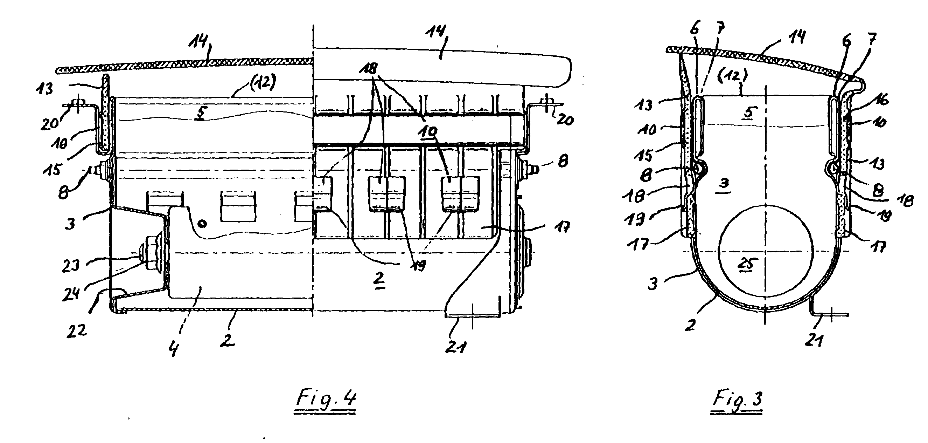

In den Figuren 3 und 4 sind die gleichen Bezugsziffern verwendet worden, wie in den Figuren 1 und 2, soweit es sich um konstruktions- bzw. funktionsmäßig gleiche Bauteile handelt. Erläutert werden nur die Bauteile, durch die sich die zweite Ausführungsform von der ersten unterscheidet. Ein grundlegender Unterschied besteht darin, daß zusammen mit dem Randbereich 6 des Gassacks 5 und evtl. einen Randbereich eines Schutzüberzuges 12 der Randbereich 13 einer Abdeckkappe 14 mittels des umlaufenden Spannbandes 10 am Gehäuse festgelegt ist. Dazu kann im Randbereich 13 der Abdeckkappe 14 eine außen umlaufende, auf die Breite des Spannbandes 10 abgestellte flache Vertiefung 15 vorgesehen sein, mittels derer eine formschlüssige Komponente zur Halterung des Spannbandes 10 an der Abdeckkappe 14 realisiert wird.

Am Randbereich 13 der Abdeckhaube 14 kann zusätzlich noch ein über den Anordnungsbereich 16 des Spannbandes 10 nach unten verlängerter Bereich 17 vorgesehen werden, um mittels darin gebildeter Ausnehmungen 18 und am Basisteil 2 ausgebildeter Laschen 19 eine formschlüssige Befestigung der Abdeckhaube 14 am Gehäuse 1 zu erreichen, indem die nach unten verlängerten Bereiche 17 in die Laschen 19 eingehakt werden. Selbstverständlich ist es auch möglich, die nach unten verlängerten Bereiche 17 - wie dargestellt - einstückig als durchgehende Wand auszuführen. Mittels der verlängerten und in die Laschen 19 eingehakten Bereiche 17 der Abdeckhaube 14 wird in Verbindung mit den in den nutartigen Vertiefungen 9 des Basisteils 2 geführten Zugstangen 8 und dem Spannband 10 eine kombinierte kraft- und formschlüssige Befestigung des Gassacks 5 wie bei dem ersten Ausführungsbeispiel erreicht.

Erwähnt sei noch, daß ein Endteil 3 mit einem rückspringenden Teil 22 auch gemäß Fig. 4 linke Seite ausgeführt werden kann, wenn eine Anpassung der Gehäuselänge an den Gasgenerator 4 erforderlich ist. Diese Ausführungsform hat gegenüber derjenigen gemäß Fig. 2 den Vorteil, daß das U-förmige Basisteil 2 überall die gleiche Länge aufweisen kann. Ferner ist noch darauf hinzuweisen, daß das Endteil im oberen Bereich bedarfsweise auch wie in Fig. 4 linker Teil ausgeführt werden kann, d.h. mit einer Materialdopplung im Randbereich und einer daran einstückig angeformten, nach außen weisenden Lasche 20. Der Randbereich 13 der Abdeckkappe 14 wird dann mit dem eingesetzten Spannband 10 von oben in den im Endteil 3 ausgebildeten Zwischenraum eingesetzt.

## Patentansprüche

1. Einbau-Modul für einen Beifahrer-Airbag mit einem trogartigen Gehäuse (1), einem in dem Gehäuse (1) angeordneten Gasggenerator (4), einem Gassack (5) und einem um das Gehäuse umlaufenden Spannband (10), dadurch gekennzeichnet, daß das Gehäuse ein im wesentlichen U-förmiges Basisteil (2) und zwei im wesentlichen flache Endteile (3) umfaßt, daß der Gassack (5) oberhalb des Gasgenerators (4) in das Gehäuse (1) eingefaltet ist, wobei ein Randbereich (6) des Gassacks (5) allseitig über den Rand (7) des Gehäuses (1) nach außen umgelegt ist und längs des Basisteils (2) um Zugstangen (8) geschlungen ist, die zur Befestigung der Endteile (3) am Basisteil (2) dienen und in einer nutartig nach innen weisenden Vertiefung (9) des Basisteils (2) geführt sind, und daß das Spannband (10) den Randbereich (6) des Gassacks (5) zwischen dem Rand (7) des Gehäuses (1) und den Zugstangen (8) kraftschlüssig an der Außenseite des Gehäuses (1) hält.

2. Einbau-Modul nach Anspruch 1, dadurch gekennzeichnet, daß das Gehäuse (1) eine außen umlaufende, auf die Breite des Spannbandes (10) abgestellte, flache Vertiefung (11) aufweist, mittels derer eine formschlüssige Komponente zur Halterung des Randbereichs (6) des Gassacks (7) am Gehäuse (1) realisierbar ist.

3. Einbau-Modul nach Anspruch 1 oder 2, dadurch gekennzeichnet, daß durch das Spannband (10) zusammen mit dem Randbereich (6) des Gassacks (5) ein Randbereich eines Schutzüberzugs (12) am Gehäuse (1) befestigt ist.

4. Einbau-Modul nach Anspruch 1, dadurch gekennzeichnet, daß durch das Spannband (10) zusammen mit dem Randbereich (6) des Gassacks (5) ein Randbereich (13) einer Abdeckkappe (14) am Gehäuse (1) befestigt ist.

5. Einbau-Modul nach Anspruch 4, dadurch gekennzeichnet, daß im Randbereich (13) der Abdeckkappe (14) eine außen umlaufende, auf die Breite des Spannbandes (10) abgestellte, flache Vertiefung (15) vorgesehen ist, mittels derer eine formschlüssige Komponente zur Halterung des Spannbandes (10) an der Abdeckkappe (14) realisiert ist.

6. Einbau-Modul nach Anspruch 5, dadurch gekennzeichnet, daß der Randbereich (13) der Abdeckhaube (14) zusätzlich noch mittels über den Anordnungsbereich (16) des Spannbandes (10) nach unten verlängerte Bereiche (17) und darin ausgebildete Ausnehmungen (18) in am Basisteil (2) des Gehäuses (1) ausgebildete Laschen (19) eingehakt ist, wodurch eine formschlüssige Befestigung der Abdeckhaube (14) am Gehäuse (1) erreicht wird.

7. Einbau-Modul nach Anspruch 6, dadurch gekennzeichnet, daß mittels der verlängerten und in die Laschen (19) eingehakten Bereiche (17) der Abdeckhaube (14) in Verbindung mit den in den nutartigen Vertiefungen (9) des Basisteils (2) geführter Zugstangen (8) und dem Spannband (10) eine kombinierte kraft- und formschlüssige Befestigung des Gassacks (5) erreicht wird.

## Claims

1. An installation module for a passenger airbag, comprising a trough-like housing (1), a gas generator (4) arranged in the housing (1), a gas bag (5) and a tensioning band (10) surrounding the housing, characterized in that the housing includes a substantially U-shaped base part (2) and two substantially flat end parts (3), that the gas bag (5) is folded into the housing (1) above the gas generator (4), a rim portion (6) of the gas bag (5) being folded outwards on all sides over the rim (7) of the housing (1) and looped along the base part (2) around tie rods (8), which serve for fastening the end parts (3) to the base part (2) and are guided in a groove-like inwardly oriented depression (9) of the base part (2), and that the tensioning band (10) holds the rim portion (6) of the gas bag (5) between the rim (7) of the housing (1) and the tie rods (8) in a form-fitting manner on the outer side of the housing (1).

2. The installation module according to claim 1, characterized in that the housing (1) has an externally surrounding and shallow depression (11) adapted to the width of the tensioning band (10), by means of which depression a form-fitting component may be realized for retaining the rim portion (6) of the gas bag (7) on the housing (1).

3. The installation module according to claim 1 or 2, characterized in that a rim portion of a protective cover (12) is secured to the housing (1), by means of the tensioning band (10) and together with the rim portion (6) of the gas bag (5).

4. The installation module according to claim 1, characterized in that a rim portion (13) of a covering cap (14) is secured to the housing (1), by means of the tensioning band (10) and together with the rim portion (6) of the gas bag (5).

5. The installation module according to claim 4, characterized in that in the rim portion (13) of the covering cap (14) an externally surrounding and shallow depression (11) is provided which is adapted to the width of the tensioning band (10) and by means of which a form-fitting component is realized for retaining the tensioning band (10) on the covering cap (14).

6. The installation module according to claim 5, characterized in that additionally by means of portions (17) extending downwards beyond the location (16) of the tensioning band (10) and recesses (18) formed therein, the rim portion (13) of the covering cap (14) is hooked into brackets (19) formed on the base part (2) of the housing (1), whereby a form-fitting fastening of the covering cap (14) on the housing (1) is achieved.

7. The installation module according to claim 6, characterized in that in connection with the tie rods (8) guided in the groove-like depressions (9) of the base part (2) and the tensioning band (10), a combined force-fitting and form-fitting fastening of the gas bag (5) is achieved by means of the extended portions (17) of the covering cap (14) which are hooked into the brackets (19).

## Revendications

1. Module de montage pour un coussin à gaz côté passager, comportant un boîtier (1) en forme d'auge, un générateur de gaz (4) agencé dans le boîtier (1), un coussin à gaz (5) et un ruban de tension (10) entourant le boîtier, caractérisé en ce que le boîtier comprend une partie de base (2) sensiblement en forme de U et deux parties d'extrémité (3) sensiblement plates, en ce que le coussin à gaz (5) est plié dans le boîtier (1) au-dessus du générateur de gaz (4), une zone de bord (6) du coussin à gaz (5) étant rabattue vers l'extérieur de tous les côtés par dessus le bord (7) du boîtier (1) et formant une boucle le long de la partie de base (2) autour de tiges de traction (8) qui servent à la fixation des parties d'extrémité sur la partie de base (2) et qui sont guidées dans un évidement (9) en forme de gorge, tourné vers le bas, de la partie de base (2), et en ce que le ruban de tension (10) maintient par coopération de forces sur la face extérieure du boîtier (1) la zone de bord (6) du coussin à gaz (5) entre le bord (7) du boîtier (1) et les tiges de traction (8).

2. Module de montage selon la revendication 1, caractérisé en ce que le boîtier (1) présente un évidement (11) plat périphérique extérieur adapté à la largeur du ruban de tension (10), au moyen duquel un composant par coopération de formes peut être réalisé pour retenir la zone de bord (6) du coussin à gaz (7) sur le boîtier (1).

3. Module de montage selon la revendication 1 ou 2, caractérisé en ce qu'au moyen du ruban de tension (10), une zone de bord d'un revêtement de protection (12) est fixée sur le boîtier (1) conjointement avec la zone de bord (6) du coussin à gaz (5).

4. Module de montage selon la revendication 1, caractérisé en ce qu'au moyen du ruban de tension (10) et conjointement avec la zone de bord (6) du coussin à gaz (5), une zone de bord (13) d'un capuchon (14) est fixée sur le boîtier (1).

5. Module de montage selon la revendication 4, caractérisé en ce que dans la zone de bord (13) du capuchon (14) est prévu un évidement (15) plat périphérique extérieur, adapté à la largeur du ruban de tension (10), au moyen duquel un composant par coopération de formes est réalisé pour retenir le ruban de tension (10) sur le capuchon (14).

6. Module de montage selon la revendication 5, caractérisé en ce que la zone de bord (13) du capuchon (14) est additionnellement encore accrochée dans des pattes (19) réalisées sur la partie de base (2) du boîtier (1) au moyen de zones (17) prolongées vers le bas au-delà de la zone d'agencement (16) du ruban de tension (10), et de creux (18) formés dans lesdites zones, pour obtenir ainsi une fixation par coopération de formes du capuchon (14) sur le boîtier (1).

7. Module de montage selon la revendication 6, caractérisé en ce qu'au moyen des zones (17) du capuchon (14), prolongées et accrochées dans les pattes (19), en liaison avec les tiges de traction (8) guidées dans les évidements en forme de gorge (9) de la partie de base (2) et avec le ruban de tension (10), on obtient une fixation combinée du coussin à gaz (5) par coopération de forces et coopération de formes.
